Europäisches Patentamt

European Patent Office

Office européen des brevets

(11) Veröffentlichungsnummer : **0 144 611**
**B1**

(12) **EUROPÄISCHE PATENTSCHRIFT**

(45) Veröffentlichungstag der Patentschrift :
11.11.87

(51) Int. Cl.⁴ : **G 02 B 27/14**

(21) Anmeldenummer : **84112014.0**

(22) Anmeldetag : **06.10.84**

(54) **Strahlenteiler.**

(30) Priorität : **27.10.83 DE 3338967**

(43) Veröffentlichungstag der Anmeldung :
**19.06.85 Patentblatt 85/25**

(45) Bekanntmachung des Hinweises auf die Patenterteilung : **11.11.87 Patentblatt 87/46**

(84) Benannte Vertragsstaaten :
**AT FR GB IT**

(56) Entgegenhaltungen :
**DE-A- 2 113 966**
**DE-A- 2 539 183**
**DE-A- 2 639 131**
**GB-A- 1 249 302**

(73) Patentinhaber : **M A N Technologie GmbH**
**Dachauer Strasse 667**
**D-8000 München 50 (DE)**

(72) Erfinder : **Amende, Welf, Dr.**
**Salzburger Strasse 1**
**D-8000 München 60 (DE)**

Jouve, 18, rue St-Denis, 75001 Paris, France

## Beschreibung

Die Erfindung bezieht sich auf einen Strahlenteiler, mit zueinander schräg orientierten Reflexionsflächen.

In der Optik bekannte Strahlenteiler bestehen aus Spiegeln mit unterschiedlich orientierten Reflexionsflächen, die den einfallenden Primärstrahl in unterschiedliche Richtungen reflektieren.

Auf diese Weise kann ein Primärstrahl beispielsweise durch zwei Reflexionsflächen, deren Flächennormalen miteinander in einem Winkel stehen, in zwei Teilstrahlen aufgeteilt werden. Die Intensität des jeweiligen Teilstrahles hängt von der Intensität des Primärstrahlenbündels ab, das auf die entsprechende Reflexionsfläche auftrifft. Bei homogener Intensitätsverteilung eines Primärstrahles läßt sich eine gewünschte Intensitätsverteilung der Teilstrahlen ganz einfach durch die entsprechende geometrische Anordnung zwischen Strahlenteiler und Primärstrahl erreichen.

Reproduzierbare Intensitätsverhältnisse von Teilstrahlen lassen sich jedoch nicht so einfach erzeugen, wenn der Primärstrahl eine inhomogene Intensitätsverteilung hat, wie es beispielsweise bei Laserstrahlen der Fall ist.

Es ist ein Spektralfotometer (DE-A-2 639 131) bekannt, bei dem es sich um optische Anordnungen zum Vereinigen von Strahlenbündeln und insbesondere Strahlenbündel vereinigende Elemente handelt, die zwei Strahlenbündel eines Spektralfotometers zu einem zusammengesetzten Strahlenbündel längs einer Achse verschmelzen. Die Erfindung richtet sich auf eine Umkehrung und verbessernde Ausgestaltung solcher Vorgänge.

Der Erfindung liegt die Aufgabe zugrunde, einen Strahlenteiler zu entwickeln, mit dem Primärstrahlen mit inhomogener Intensitätsverteilung in Teilstrahlen aufteilbar sind, die annähernd reproduzierbare Intensitätsverhältnisse haben.

Die Aufgabe ist erfindungsgemäß durch die im Anspruch 1 gekennzeichneten Merkmale gelöst.

Mit einem erfindungsgemäßen Strahlenteiler wird ein Teilstrahl durch die Summe von an mehreren Reflexionsflächen reflektierten Strahlenbündeln erzeugt. Durch die Aufteilung an Reflexionsflächen-Segmenten können schwache und stärkere Intensitätszonen des Primärstrahles zur Bildung eines Teilstrahles beitragen, so daß näherungsweise das Intensitätsverhältnis der Teilstrahlen dem Flächenverhältnis der jeweiligen Reflexions-Segmentgruppen proportional ist. Die Aufteilung einer Reflexionsfläche in mehrere Segmente glättet somit die Energieverteilung, so daß eine annähernd reproduzierbare Aufteilung möglich ist.

Bei der Aufteilung in Teilstrahlen mit gleichen Intensitätsverhältnissen können die Reflexionssegmente verschiedener Orientierungen vorzugsweise abwechselnd angeordnet sein, wodurch sich die Wahrscheinlichkeit einer Glättung der Energieverteilung erhöht.

Gemäß einer weiteren Ausführung der Erfindung ist der Strahlenteiler aus mehreren nebeneinander angeordneten, jeweils eine oder mehrere Reflexionsflächen aufweisenden Prismen ausgebildet.

Eine derartige Ausführung läßt sich, da sie im Baukastensystem aufgebaut ist, an den jeweiligen Bedarf anpassen, indem durch Umstellung oder Austausch von Prismen die Flächenverhältnisse für die verschiedenen Segmentgruppen variiert werden können.

In der Zeichnung sind Ausführungsbeispiele nach der Erfindung schematisch dargestellt.

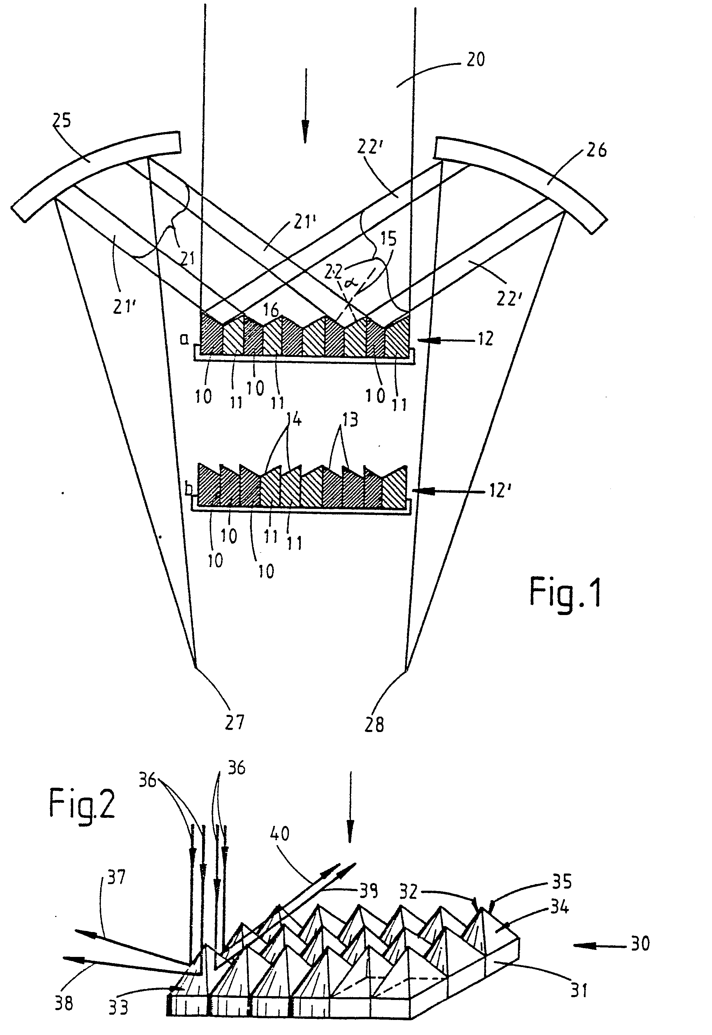

Fig. 1 zeigt einen aus mehreren Prismen 10 und 11 bestehenden Strahlenteiler 12, wobei eine erste Gruppe von Prismen 10 jeweils in einer Richtung 15 orientierte Reflexionsflächen-Segmente 13 trägt und die andere Prismengruppe 11 in eine andere Richtung 16 orientierte Reflexionsflächen-Segmente 14 hat, deren Flächennormalen 15 bzw. 16 einen Winkel untereinander bilden.

Bei dieser in Fig. 1 im Querschnitt dargestellten Ausführung eines Strahlenteilers 12 wird ein senkrecht auftreffender Primärstrahl 20 in zwei Teilstrahlen 21 und 22 aufgeteilt, die sich jeweils aus der Summe von Strahlenbündeln 21' bzw. 22' zusammensetzen. Die Strahlenbündeln 21' bzw. 22' sind jeweils die von den von einzelnen Reflexionsflächen-Segmenten der zweiten bzw. der ersten Reflexionsflächengruppe 14 bzw. 13 reflektierten Strahlen. Die Strahlenbündel 21', 22', werden bei einem Primärstrahl mit inhomogener Intensitätsverteilung unterschiedliche Intensitäten aufweisen, und zwar je nachdem, ob auf das jeweilige Reflexionsflächen-Segment 14 ein energieintensiver oder -armer Bereich des Primärstrahles 20 auftrifft.

Bei der Verwendung von vielen Reflexionsflächen-Segmenten 13 bzw. 14 werden die reflektierten Strahlenbündel 21' bzw. 22' im Mittel einen Intensitätswert haben, der einem Strahlenbündel entspricht, der durch Reflexion eines Primärstrahles 20 mit homogener Energieverteilung erzeugt ist. Auf diese Weise können näherungsweise und reproduzierbar Teilstrahlungen 21, 22, erzeugt werden, deren Intensitäten im Verhältnis zur gesamten Reflexionsfläche einer jeweiligen Segmentgruppe 13 bzw. 14 stehen.

Ist die Intensitätsaufteilung eines Primärstrahles 20 bekannt oder will man Teilstrahlen mit unterschiedlicher Intensität erzeugen, so können die Prismen 10 und 11 von der regelmäßigen Anordnung gemäß Fig. 1a in eine entsprechende Anordnung umgestellt werden, z. B. wie in Fig. 1b, um für den jeweiligen Anwendungsfall die erforderlichen Teilstrahlenintensitäten zu erreichen.

Um einen Strahlenteiler für mehrere Zwecke verwenden zu können, wird er aus trennbaren Segmenten 10 und 11 im Baukastenprinzip hergestellt. Damit können die Segmente 10 und 11 je nach Bedarf zusammengesetzt werden.

Die Teilstrahlen 21 und 22 werden schließlich mit Konzentratoren 25 und 26 in sekundären Brennflecken 27 bzw. 28 gebündelt.

In Fig. 2 ist ein Strahlenteiler 30 gezeigt, der sich aus vielen pyramidenförmigen Reflexionsbausteinen 31 zusammensetzt, die jeweils vier Reflexionsflächen-Segmente 32 bis 35 verschiedener Orientierungen aufweisen. In diesem Fall wird der Primärstrahl 36 in vier Teilstrahlen aufgeteilt, die sich jeweils aus von Reflexionsflächen-Segmente gleicher Orientierung reflektierten Strahlenbündeln 37 bis 40 ergeben.

## Patentansprüche

1. Strahlenteiler mit zueinander schräg orient-ierten Reflexionsflächen, wobei die Reflexionsflä-chen einer Orientierung (15 bzw. 16) mehrere, über die gesamte Fläche des Strahlenteilers (12, 30) verteilte Reflexions-Segmente (13, 14 bzw. 32 bis 35) aufweisen, dadurch gekennzeichnet, daß der Strahlenteiler (12, 30) aus mehreren nebeneinander angeordneten, jeweils mindestens ein Reflexionsflächen-Segment (13, 14 bzw. 32 bis 35) tragenden Prismen (10, 11 bzw. 31) besteht, die ein Baukastensystem bilden.

2. Strahlenteiler nach Anspruch 1, dadurch gekennzeichnet, daß die Reflexionsflächen-Segmente (13, 14 ; 32 bis 35) unterschiedlicher Orientierung abwechselnd angeordnet sind.

## Claims

1. Beam splitter with reflection surfaces orientated obliquely in relation to each other, whereby the reflection surfaces of an orientation (15 or 16) are provided with several reflection segments (13, 14 or 32 to 35) distributed over the complete surface of the beam splitter (12, 30), characterised in that the beam splitter (12, 30) consists of several prisms (10, 11 or 31) arranged adjacent to each other and bearing in each case at least one reflection surface segment (13, 14 or 32 to 35) and which form a modular construction system.

2. Beam splitter according to claim 1, characterised in that the reflection surface segments (13, 14 ; 32 to 35) of different orientation are arranged alternately.

## Revendications

1. Diviseur de rayonnement, comportant des surfaces réfléchissantes orientées obliquement les unes par rapport aux autres, où les surfaces réfléchissantes d'une orientation (15 ou 16) présentent de multiples segments (13, 14 ou 32 à 35), répartis sur toute la surface du diviseur de rayonnement (12, 30), caractérisé en ce que ce diviseur de rayonnement (12, 30) est constitué par de nombreux prismes (10, 11 ou 31) disposés côte à côte, portant chacun au moins un segment (13, 14 ou 32 à 35) de surface réfléchissante, qui forment un système modulaire.

2. Diviseur de rayonnement suivant la revendication 1, caractérisé en ce que les segments de surfaces réfléchissantes (13, 14 ; 32 à 35) d'orientation différente sont placés en alternance.

Fig.1

Fig.2